# EUROPEAN PATENT APPLICATION

(11) **EP 0 636 907 A1**
(43) Date of publication of application: **01.02.1995**
(21) Application number: 94305597.0
(22) Date of filing: 28.07.1994
(51) Int. Cl.: G02B 5/08, G02B 5/10

(54) **Infrared reflective plastic optics with improved mechanical and optical properties**

(30) Priority: 29.07.1993 US 99280
(71) Applicant: Hughes Aircraft Company, Los Angeles, California 90045-0066 (US)
(72) Inventor: Taylor, Christopher D., Redondo Beach, California 90277 (US); Klapper, Stuart H., Palos Verdes, California 90274 (US)
(74) Representative: Jackson, Richard Eric

(57) **Abstract**

Novel mirror materials and fabrication processes are used to produce extremely low cost reflective optical components. Reflective mirrors are made using injection molded filled plastic. Reinforcing filler materials are added to the plastic resin prior to molding. Subsequent to injection molding, the plastic mirrors are coated with aluminum or other infrared reflective coating by means of vacuum deposition, for example, to produce a reflective surface. Additives or external metallization provide for control of thermal conductivity. The mirrors produced in accordance with the present invention may be used for 8-12 or 3-5 micron infrared imaging. However, the present plastic mirrors, when appropriately coated, may also be used in other wavelength bands. By employing the principles of the present invention, low cost mirrors with improved thermal stability and optical quality are achieved. The principle advantage of the present invention is a dramatic reduction in cost possible over reflective elements manufactured using conventional precision optical fabrication methods. The present mirrors have improved optical properties, primarily mirror figure and thermal stability.

## Description

### BACKGROUND

The present invention relates to infrared optics, and more particularly, to reflective plastic optics employing filled plastic materials.

Infrared sensor systems may employ reflective optics, refractive optics, or a combination these two optics types. Refractive designs require exotic infrared lens materials and are therefore not consistent with producing a low cost sensor. There are many materials and methods for fabricating reflective optical components. They are commonly made from glass, metals (such as aluminum, steel, or copper, for example), beryllium, and glass or ceramics, and the like. Low quality flat mirrors are sometimes made out of unreinforced plastic. Using conventional precision optical fabrication techniques, mirror fabrication costs are very high and the materials used are also often costly. Therefore, using conventional fabrication methods for precision reflective optics, the fabrication cost is prohibitive for very low cost systems. Using current injection molding techniques is a low cost solution, however, the quality and stability are not adequate for many applications.

Injection molded plastics are currently used in some optical applications. The vast majority of these optics are refractive, operating in visible wavelengths. These plastic materials cannot be used for refractive infrared applications because they do not transmit in the required wavelength bands. Injection molded plastics are occasionally used for reflective purposes, however, after a considerable investigation of plastic optics suppliers, reflective infrared optical components have not been found.

While reflective optics have been made from injection molded plastics, the current technology strictly employs unreinforced (unfilled) plastic materials. The optical components made using these unfilled materials have several drawbacks. The major drawbacks in using standard unreinforced plastics are low accuracy in terms of mirror figure, and susceptibility to thermal gradients, both of which impact optical performance. Therefore, reflective optics produced using the current technology can only be used for low-precision applications.

### SUMMARY OF THE INVENTION

The present invention uses novel mirror materials and fabrication processes to produce extremely low cost reflective optics that are of very good optical quality. In the present invention, reflective mirrors are made using injection molded filled plastic. Subsequent to injection molding, the plastic mirrors are coated with aluminum, or other infrared reflective coating, by means of vacuum deposition, for example, to produce a reflective surface. The principle application for mirrors produced in accordance with the present invention is for 8-12 or 3-5 micron infrared imaging. However, the present plastic mirrors, when appropriately coated, may be used in other wavelength bands.

By employing the principles of the present invention, low cost mirrors with improved thermal stability and optical quality are produced. The principle advantage of the present invention is a dramatic reduction in cost possible over reflective elements manufactured using conventional precision optical fabrication methods. In high rate production, a reduction in cost of a factor of 25 times, compared to conventional technology, is possible by employing the present invention. The low cost is achievable through the use of plastic injection molding for fabrication of the reflective infrared mirrors. A key feature allowing use of injection moldable plastics for this application is the addition of reinforcing filler materials to the plastic resin. Mirrors produced in this way have much improved optical properties (primarily mirror figure and thermal stability) compared with mirrors made using conventional optics molding techniques.

The reflective plastic mirrors of the present invention may be used in optical systems and applications for traffic management; police and security; trucks, buses, recreational vehicles; and instruments, such as medical, dental, industrial, and the like. There are also potential military uses for a very low cost medium-performance infrared sensor employing plastic filled optical components.

### BRIEF DESCRIPTION OF THE DRAWINGS

The various features and advantages of the present invention may be more readily understood with reference to the following detailed description taken in conjunction with the accompanying drawings, wherein like reference numerals designate like structural elements, and in which:
Fig. 1 is a perspective view of a molded plastic optical assembly comprising reflective infrared plastic optics that incorporates filled plastic material, made in accordance with the principles of the present invention; and
Figs. 2-4 illustrate top, front and side views, respectively, of the molded plastic optical assembly of Fig. 1.

### DETAILED DESCRIPTION

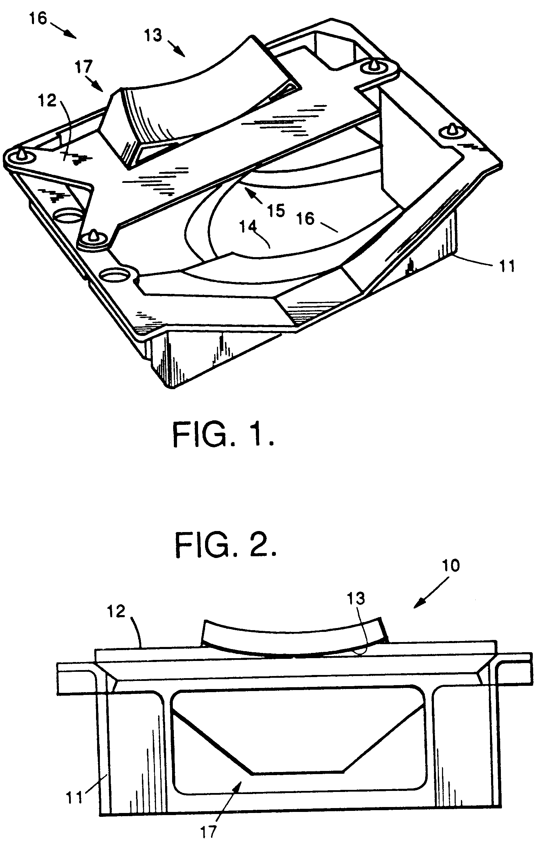

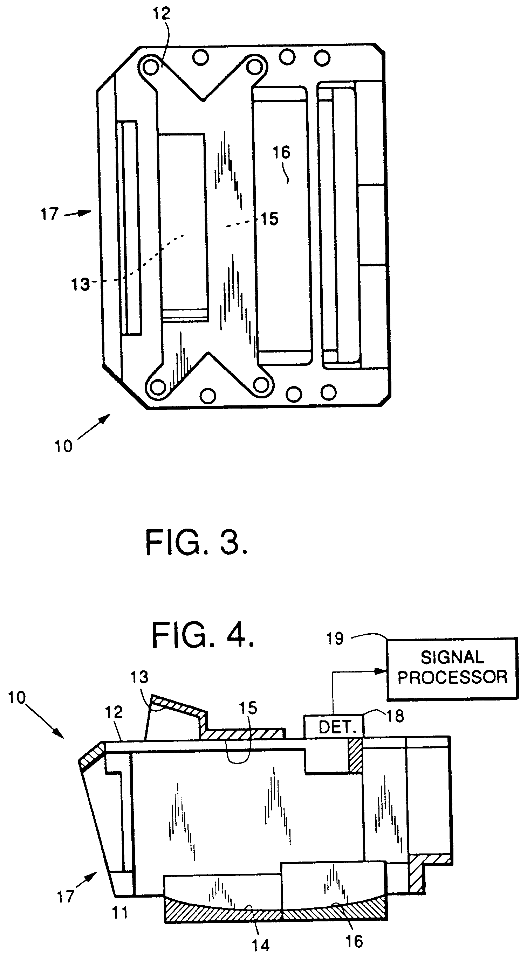

Referring to the drawing figures, Fig. 1 is a perspective view of a molded plastic optical assembly 10 comprising reflective infrared plastic optics that incorporates filled plastic material, made in accordance with the principles of the present invention. Figs. 2-4 illustrate top, front and side views, respectively, of the molded plastic optical assembly 10 of Fig. 1. The molded plastic optical assembly 10 comprises lower and upper housings 11, 12, that form base and cover assemblies, respectively. The upper housing 12 has molded therein first and third reflecting mirrors 13, 15. The lower housing 11 has molded therein second and fourth reflecting mirrors 14, 16. An infrared transmissive window 17 is disposed on the front surface of the lower housing 11. An optical path is formed from the window 17 through the mirrors 13-16 to an infrared detector assembly 18. The infrared detector assembly 18 is disposed at a focal plane located at a focal plane of the fourth mirror 16. Electronic circuitry 19, such as a signal processor, for example, is coupled to the detector assembly 18 and processes infrared signals detected thereby to produce a video image on a video display. This circuitry and processing is conventional, and will not be described in detail herein.

The mirrors 13-16 are fabricated using injection molding techniques and reinforced (filled) plastic molding materials as will be described in more detail below. The molded mirrors 13-16 are coated with a reflective coating applied by a vacuum deposition or other coating process. The molded plastic optical assembly 10 is adapted for use as a portion of an infrared optical imaging system, or night vision system, that may be used in low-cost applications, such as in an automobile, for example. While it is to be understood that the shape of the molded plastic optical assembly 10 and the number of mirrors 13-16 employed there are generally a matter of design choice, it is believed that the use of three and four reflective mirrors in accordance with the present invention is a novel aspect thereof.

The present invention provides for the production of low cost reflective optics (mirrors) made from plastic, by using injection molding techniques and reinforced (filled) plastic molding materials. The molded mirrors 13-16 are coated with a reflective coating 21 applied by vacuum deposition, replication, sputtering, plasma vacuum deposition, or other coating process subsequent to molding. The present invention provides for the production of low cost precision mirrors 13-16 and optical assemblies, as will be described below. A main cost feature is achieved by producing good quality reflective mirrors 13-16 at very high rates, up to 10,000 per month using one injection molding machine, for example. Also an additional cost savings, compared to refractive optical glasses and reflective mirror materials, is realized by the use of relatively low-cost plastic raw materials.

The use of filler materials in the mirrors 13-16, such as glass beads, for example, results in mirrors 13-16 with a much lower coefficient of thermal expansion compared to those fabricated using an unfilled plastic material. A lower coefficient of thermal expansion provides mirrors 13-16 with improved resistance to thermal variations, particularly to thermal gradients. With the filler materials used in the present invention, the coefficient of thermal conductivity of the mirrors 13-16 is also increased. This results in a lower thermal gradient and, therefore, in more thermally stable mirrors 13-16. The filler materials generally result in more structurally rigid mirrors 13-16, which resists bending, and the mirrors 13-16 are therefore able to hold their desired shape more accurately. The mirrors 13-16 may also be molded thinner, while providing the same stiffness as conventional mirrors of the same size and shape. This allows for a shorter molding cycle, which is a further cost reducing benefit, and also results in a more accurate mirror surfaces by minimizing effects of nonuniform cooling.

A reflective imager assembly is formed by the molded plastic optical assembly 10 may be molded as an integral mirror/housing assembly comprising one or two housings 11, 12. Fig. 1 shows a two piece assembly with integral mirrors 13-16, for example. Producing the optical assembly 10 in this manner requires a minimum of mounting and fastening hardware and a minimum of assembly time. This is a further cost savings feature of the present invention. Alternatively, the optical assembly 10 may be made using individually molded mirrors 13-16 mounted to a separate housing or housings 11, 12.

Sample mirrors 13-16 were molded in order to reduce the present invention to practice. A number of different materials and mirror configurations were molded and tested. Test results show that the filled materials are much less sensitive to thermal effects than conventional unreinforced plastic mirrors. Results of this testing indicate that precision mirrors are producible at an extremely low cost using injection molding and a filled plastic material as described herein. The details of the materials and tests is presented below.

In order for the optical system 10 to meet its optical requirements in production, the filled molding material must satisfy a number of conditions. These include: mechanical stability, thermal stability, environmental stability, and optical requirements, which include the ability to achieve an adequate surface finish and mirror figure. Also important, is the availability of a high rate fabrication process and an acceptable raw material cost.

There are a wide variety of plastic materials available. These materials fall into generic categories depending on their basic chemical composition. Within the generic categories there are numerous variations depending on exact composition, manufacturer and filler materials. The material types that have been investigated are listed in Table 1. Table 2 lists the material properties of the preferable materials that may be employed in the present invention. Aluminum is also included in Table 2 for comparison, because it is currently the standard reflective material for reflective optical systems. It is to be understood that a single plastic material will not always provide optimum properties for all applications, and therefore, a trade-off is required to select the best compromise material from the materials listed in Table 2 for any desired application.

The important material properties for plastic optical systems made in accordance with the present invention are discussed below. These include the following. Mechanical: stiffness (flexure modulus), filler material, stability over time, and thermoset versus thermoplastic material. Thermal: coefficient of thermal expansion, coefficient of thermal conductivity, and deflection temperature. Optical: mirror figure, mirror surface quality, and coating issues. Environmental: equilibrium water content, and susceptibility to chemicals, UV radiation, outgassing, etc. Fabrication: molding methods, and mold shrinkage. Cost: raw material cost, and cycle time.

Mechanical properties: Flexural modulus is a measure of the stiffness of a material. The flexural modulus is the strain (bending) exhibited by a material as a function of a force, applied over the linear portion of the stress/strain curve. Stiffness of the plastic materials is important for two reasons. First, the housings 11, 12 must be fastened together (unless a one piece assembly is molded) and second, the assembly needs to be mounted for is intended use, such as in a vehicle, for example, for use as an automobile night vision optical system, for example. Rigidity of the material and fabricated mirrors 13-16 prevents a drop in performance due to bending of the structure. Also, during fabrication and during subsequent aging, a more rigid material tends to retain a desired molded shape. In order to provide maximum stiffness, a high flexural modulus is provided. Based on the properties of the available plastic materials, a flexural modulus of between 20 and 50x10⁵ Lb/in² is preferred. There are a number of plastic materials with a flexural modulus in this range, and in fact, all of the materials listed in Table 2 meet this criterion.

Filler materials are primarily used to add strength to plastic materials. In addition to added strength, the coefficient of thermal expansion is generally reduced by the addition of the filler materials. Filler materials are also used to enhance a number of other properties, such as, resistance to flammability, lubricity, electrical conductivity, and flexibility. Carbon and glass fiber are two of the most common filler materials. Other filler materials such as graphite, cellulose, minerals, and metals are also used. The filler material is generally determinative of the molding process that is used, as well as the rate at which the material can be injected into a mold. An abrasive filler material also causes the mold to wear more rapidly. These two effects add cost in production by increasing the molding cycle time and by reducing the lifetime of the molds.

Carbon fiber, graphite fiber and Kevlar generally provide good structural properties. These materials are quite expensive, however. Glass fiber is a presently preferred filler material, since it provides very good structural and thermal properties at a relatively low cost.

There is a basic chemical differentiation in the way plastic materials are solidified. Thermoplastic materials merely cool down and solidify. Thermoset materials undergo a chemical reaction during formation and become what is described as "crosslinked". Thermoset materials are generally more stable than thermoplastic materials due to this chemical interaction. Generally, because of the increased stability, a thermoset material is preferred over a thermoplastic material. The distinction between material types becomes somewhat less clear in certain materials. For example, there are materials that are thermoplastic materials but behave more like thermoset materials.

Thermal properties: The major thermal property for the present filled plastic materials is the coefficient of thermal expansion. A low coefficient of expansion results in an optical assembly that is better able to maintain its performance over temperature. Based on the desire to achieve low thermal expansion, the desired coefficient of expansion for the plastic material is in the range 0.4 to 1.5x10⁵ in/in °F (see Table 2). For reference, these values compare favorably to a value 1.3x10⁵ in/in °F for aluminum.

Thermal conductivity also plays an important role in the thermal stability of the material. The larger the coefficient of thermal conductivity the more uniform the temperature of the part will be, and therefore, the more uniform the growth. In theory, uniform growth of the structure due to temperature changes does not cause a reduction in optical performance (with the exception of a corresponding change in the focal length and an inverse change to the field of view). In order to achieve uniform growth due to thermal effects, the entire optical system is made out of the same material. Attention to thermal conductivity is an important issue because plastics are very poor at conducting heat. Generally, plastic materials have coefficients of thermal conductivity between 15 and 100 times lower than aluminum. The need for a low coefficient of expansion is made all the more important by the low thermal conductivity of the plastic materials. A desired thermal conductivity of the mirrors 13-16 may be achieved with a metalized exterior coating or by using additives to the material. Such additives are added to the filler material prior to molding.

The deflection temperature of plastic material is an important thermal property, but it is not a key parameter. Since the amount of deformation at a deflection temperature is far in excess of what is tolerable for optical performance, it is required that optical system never experience temperatures anywhere near the deflection temperature. Deflection temperatures for plastic materials generally range from around 250 °F to around 650 °F. There are materials with deflection temperatures below 250 °F, but these are generally not acceptable. The material for the mirrors 13,-16 has a deflection temperature of around 300 °F, or higher, to assure that softening of the material is precluded. The materials chosen on the basis of low thermal expansion and relatively high material strength tend to have high deflection temperatures. This is the case for the materials identified in Table 1.

Optical properties: Generally the optical properties given for plastics relate to the refractive index and clarity of the material. The optical properties that are important are mirror figure and surface quality. Mirror figure is the accuracy with which the mirror matches the intended mirror shape. The accuracy with which the mirror figure can be molded appears to be a key factor in producing an acceptable optical assembly 10. Results of a preliminary tolerance analysis indicate that the surface figure currently obtainable on molded optics is in the range of from 5-10 fringes/in, at 0.63 microns.

Surface quality, or surface finish, is a measure of the smoothness of an optical surface. Poor surface quality is a source of scattered light, resulting in degraded optical performance, and in severe cases even a decrease in system transmittance. Acceptable surface qualities have been demonstrated on the preferred molded plastic materials.

Reflective coatings have been successfully vacuum deposited on plastic materials and may be done in a relatively cost effective manner in production. Vacuum deposition requires unobstructed access to the surface to be coated in the coating chamber. As an alternative, plasma coating techniques are able to coat the inside of objects.

Environmental properties: The optical system 10 may be adapted for location in a passenger compartment of an automobile, for example, which is a fairly benign environment. Even so, plastics have a tendency to absorb water. This may result in a change in their shape, and therefore, represents a potential drop in performance. For the materials employed in the present invention, the equilibrium water content should be between 0.05% and 0.3%. If required, the plastic materials may be encapsulated to reduce their water absorption.

Fabrication methods: For the purpose of simplicity, the high rate molding process used to fabricate the housings 11, 12 and mirrors 13-16 has been generally referred to as injection molding. There are actually a number of methods used to mold plastics. The basic methods are injection molding, compression molding, transfer molding, and extrusion. Injection molding is generally the least expensive and highest rate production technique, but can only be used on thermoplastic materials that remain in a liquid state for long periods of time. This is because the material is stored in a liquid state during molding. Because thermoset materials are solidified by chemical reactions, they do not remain in a liquid state long enough to be injection molded. These materials can, however, be transfer molded in an economical high rate fashion. The optimum fabrication process is dependent on the materials chosen and the ability to achieve dimensional and surface accuracies with the various methods.

The generic material types that may be employed in the present invention are listed below in Table 1. Since there are hundreds of basic types of plastics and thousands of specific formulations and combinations, only the most common plastics are presented, as well as those found to have been used for optical applications. Because most of the optical applications found were for refractive (transmissive) components, these materials are not necessarily the best for use in the reflective optical assembly. Table 2 lists the properties of interest for a number of specific materials that are preferred for use in the present invention.

**Table 1.**

| Generic Plastic Material Types: | |
|---|---|
| 1) Acrylic | 13) Polyetherether ketone (PEEK) |
| 2) Polystyrene | 14) Polyester (TP & TS) |
| 3) Polycarbonate | 15) Silicone |
| 4) Polysulfone | 16) Polyethylene |
| 5) Polyimide | 17) Polypropylene |
| 6) Polyamide-Nylon | 18) Polyurethane |
| 7) Polyamide-imide | 19) Urea-formaldehyde |
| 8) Polyetherimide | 20) Melamine |
| 9) Phenolic | 21) Acetyl |
| 10) Epoxy | 22) Acrylonitrite-Butadiene-Styrene (ABS) |
| 11) Styrene acrylonitrite (SAN) | 23) Polyphenaline oxide (polyphenalene sulfide) |
| 12) Polyvinyl chloride (PVC) | |

The acrylics and polystyrenes are often used for optical applications. This is due mostly to their transmissive and surface finish properties. The materials must be used unfilled in order to maintain their transmissive properties, and therefore they tend to have relatively high coefficients of thermal expansion. For refractive components, the surface figure and dimensional stability is much less important than for reflective systems, therefore, refractive components made from these materials are acceptable for their applications. These two materials types do not represent the best potential candidates for use in the present invention.

Polycarbonate and polysulfone are also often used for refractive optical components. Polycarbonate is the most common material used for refractive optical applications. Both polycarbonate and polysulfone lenses have been produced in high quantities. These materials are also produced in filled varieties, which have much reduced thermal expansion and improved stiffness. These materials have good potential since they have a strong history of being molded with a good surface finish and have good mechanical and thermal properties. The disadvantage of polycarbonate and polysulfone is that they are thermoplastic rather than thermoset materials.

Polyimides are potentially good materials for the present reflective optical system 10. Polyimide is a thermoset material that can be filled to produce a structurally stiff and stable material with a low coefficient of thermal expansion. The surface finish obtainable on a molded part is unknown at present, as no evidence has been found regarding the use of this material in optical applications.

Polyamide-imide is a normally thermoset material modified by the addition of the amide chain, making it a thermoplastic material. Nylon and Torlon are examples of this type of material. The Nylon materials fall into a number of families (6, 6/6, 6/12, etc.). The Nylon 6/12 family contains low water absorption varieties and are the best potential materials in the Nylon category. Nylon varies dramatically in its tendency to absorb water. The equilibrium water content varies from a very low value of 0.03% to an extremely high value of 11%. Some Nylon materials, when filled, have good stiffness and low thermal expansion. Also, some Nylon materials have an advantage over other plastic materials in the area of thermal conductivity. The plastics identified herein generally have a coefficient of thermal conductivity of between 1 and 4. One of the Nylon materials has a conductivity of 8.5. For comparison aluminum (6061-T6) has a coefficient of 97. Nylon is a potentially good material, however, it is a thermoplastic not a thermoset material and its long term stability is somewhat questionable. Another polyamide-imide is Torlon, which can be thought of as a very good Nylon. It has very good thermal and stiffness properties and is listed in Table 2 as a preferred material .

Phenolic is a material that may be used in the present reflective optical system 10. Phenolic is a thermoset material with high stiffness and reasonably low thermal expansion. Phenolic has an equilibrium water content that can be as low as 0.06% and thermal conductivity which is about average. The surface quality obtainable by molding phenolic materials has not been determined at present.

Polyetherimide is a thermoplastic material with a low coefficient of expansion and good structural properties when filled with carbon fiber. The glass filled variety of polyetherimide has a thermal expansion a little higher than some of the other materials identified.

Epoxy is a thermoset material with very good structural and thermal properties and acceptable environmental properties. The thermal conductivity of the recommended material is also relatively high. Epoxy resins are generally not expensive, however, some filler materials, such as graphite and Kevlar may result in a prohibitively high raw material cost. Glass filled epoxies are relatively inexpensive and represent one of the most promising materials.

Cost issues: The ultimate production cost of the optical assembly depends on raw material cost, cycle time for molding, coating costs, and on any labor which may be required for assembly and testing, etc. A major factor contributing to high raw material cost, is the filler material. Carbon fiber, graphite fiber and Kevlar are relatively high cost filler materials, but provide the best thermal and structural performance. Glass fiber is a relatively low cost filler material, and provides very good thermal and stiffness improvements. The most desirable materials identified in Table 2 do not contain high cost filler materials.

In order to provide the most stable optical system 10, the preferred material type is a thermoset material. Most of the desirable materials, including all of the materials identified in Table 2, have heretofore not been used to make optical components. In view of the preceding discussion, the materials identified in Table 2 are well-adapted for use as a reflective mirror material for use in the present invention. These materials are those which possess the desired mechanical, thermal, and environmental properties.

Thus there has been described a new and improved reflective infrared plastic optics employing filled plastic materials. It is to be understood that the above-described embodiment is merely illustrative of some of the many specific embodiments which represent applications of the principles of the present invention. Clearly, numerous and other arrangements can be readily devised by those skilled in the art without departing from the scope of the invention.

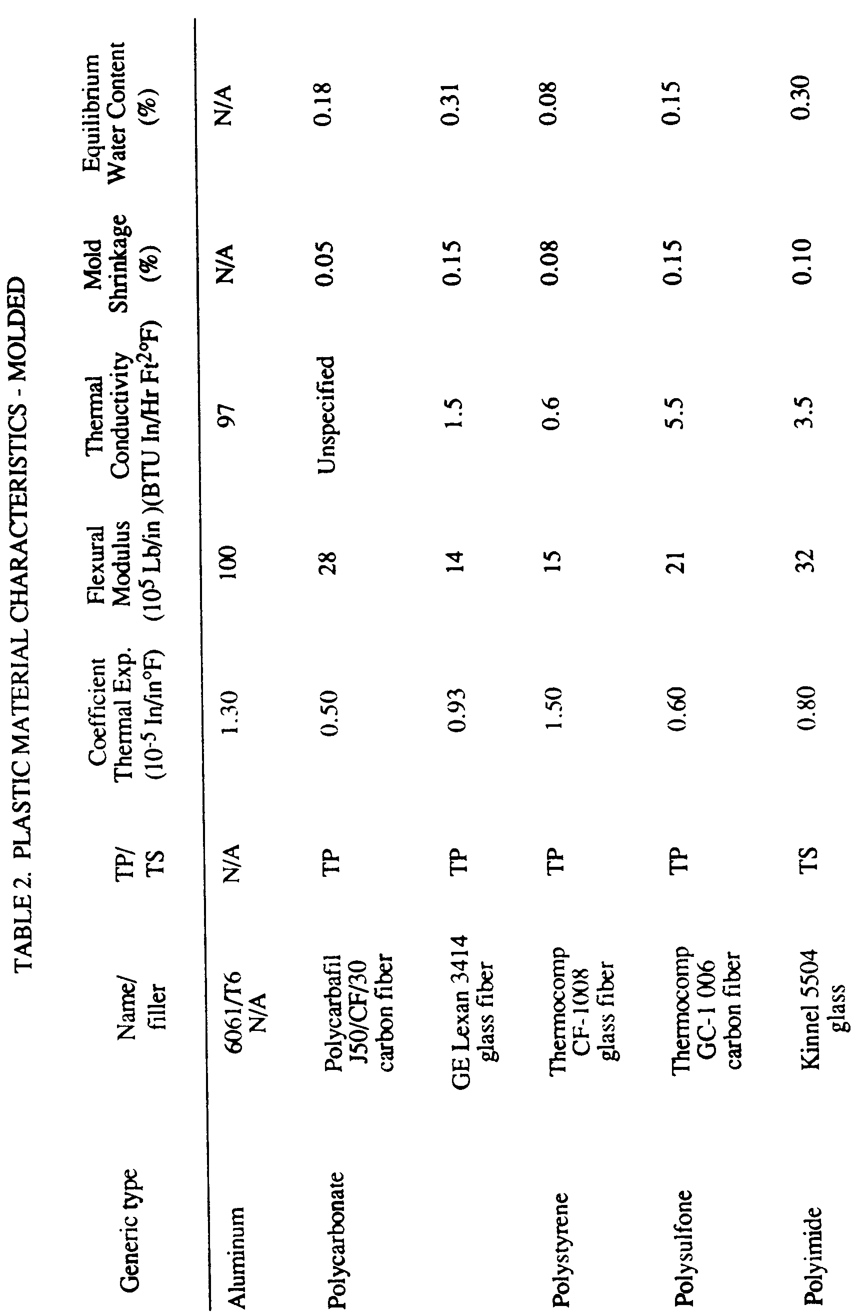

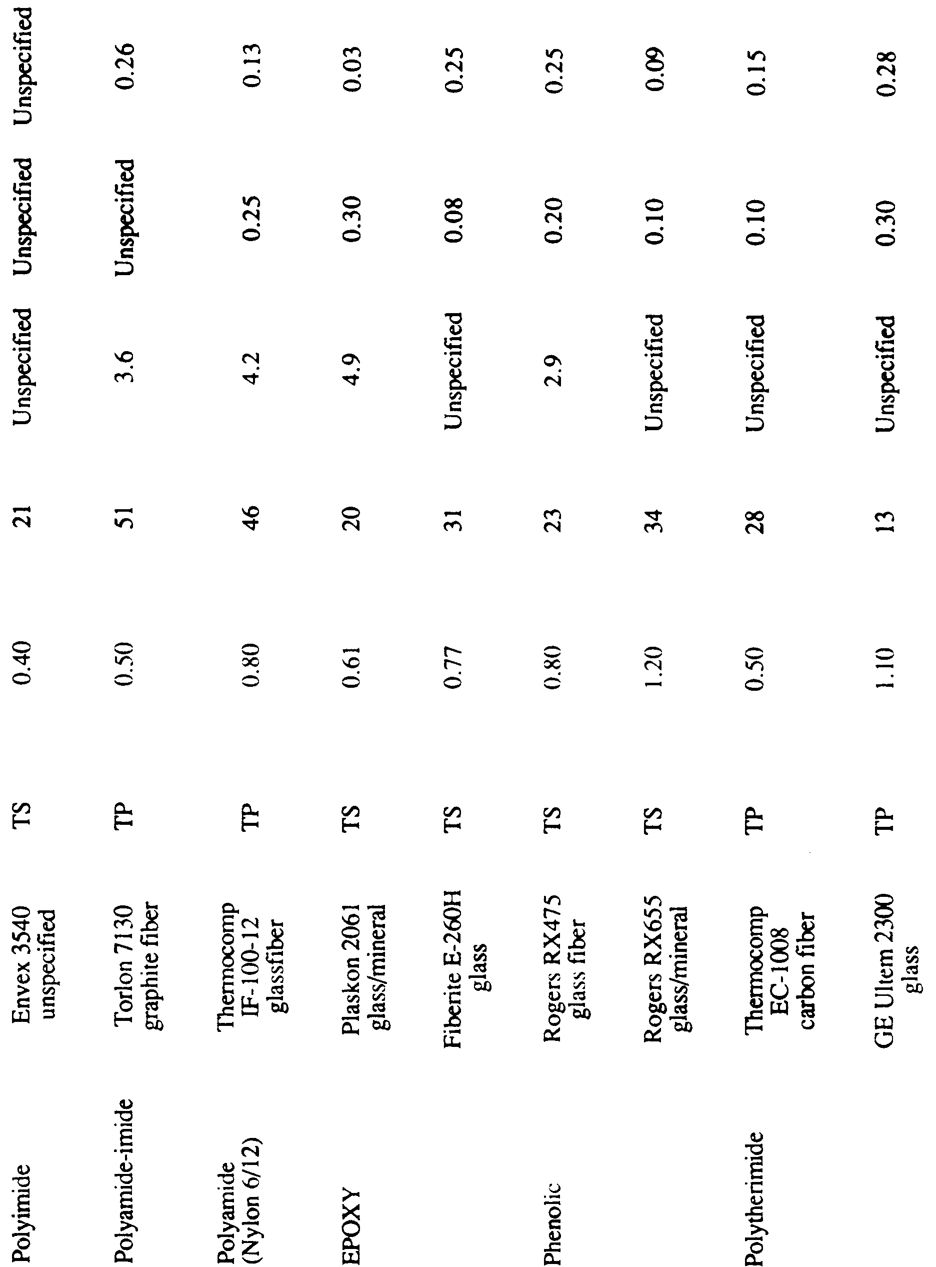

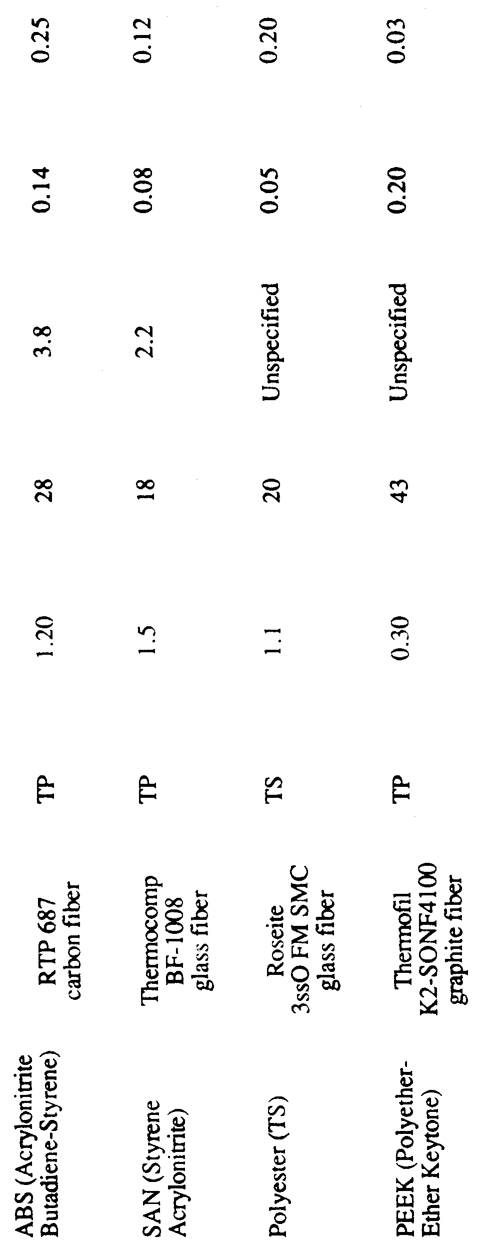

## Claims

1. An infrared reflective mirror comprising:
a plastic material filled with a predetermined filler material and molded into a predetermined shape having a predetermined radius of curvature; and
an infrared reflecting coating disposed on the molded, filled plastic material.

2. The infrared reflective mirror of Claim 1 wherein the predetermined filler material comprises glass beads.

3. The infrared reflective mirror of Claim 1 wherein the predetermined filler material comprises carbon fiber.

4. The infrared reflective mirror of Claim 1 wherein the predetermined filler material comprises graphite fiber.

5. The infrared reflective mirror of Claim 1 wherein the filled plastic material has a flexural modulus of between 20 and 50 x10⁵ Lb/in².

6. The infrared reflective mirror of Claim 1 wherein the infrared reflecting coating comprises aluminum.

7. The infrared reflective mirror of Claim 1 wherein the filled plastic material has a coefficient of expansion in the range 0.4 to 1.5 x10⁵ in/in °F.

8. The infrared reflective mirror of Claim 1 which further comprises:
a metalized exterior coating that provides for a predetermined thermal conductivity.

9. The infrared reflective mirror of Claim 1 which further comprises:
a predetermined additive added to the plastic material prior to molding that provides for a predetermined thermal conductivity of the molded mirror.

10. An infrared imaging system comprising:
a housing comprising a plastic material filled with a predetermined filler material and having a portion thereof molded into a predetermined shape having a predetermined radius of curvature that provides a reflective surface when it is reflectively coated;
an infrared reflecting coating disposed on the portion of the molded, filled plastic material;
an optically transparent window disposed at an entrance of the housing;
a detector disposed at a focal plane defined by the predetermined radius of curvature for imaging infrared energy transmitted by the window and reflected by the reflecting coating; and
signal processing and display electronics coupled to the detector for converting imaged infrared energy into a visible image suitable for viewing.
